# FASCICULE DE BREVET EUROPEEN

(11) **EP 0 960 292 B1**
(45) Date de publication et mention de la délivrance du brevet: **06.08.2003**
(21) Numéro de dépôt: 98959983.2
(22) Date de dépôt: 14.12.1998
(51) Int. Cl.: F16F 15/16

(54) **AMORTISSEUR DE TORSION, NOTAMMENT DOUBLE VOLANT AMORTISSEUR POUR VEHICULE AUTOMOBILE**
TORSIONSSCHWINGUNGSDÄMPFER, INSBESONDERE DOPPELSCHWUNGRADDÄMPFER FÜR KRAFTFAHRZEUGE
TORSIONAL DAMPER, IN PARTICULAR DOUBLE DAMPER FLYWHEEL FOR MOTOR VEHICLE

(30) Priorité: 12.12.1997 FR 9715908
(43) Date de publication de la demande: 01.12.1999
(73) Titulaire: VALEO EMBRAYAGES s.a.s., 80009 Amiens Cedex 1 (FR)
(72) Inventeur: BONFILIO, Ciriaco, F-92110 Clichy (FR)
(74) Mandataire: Lemaire, Marc
(86) Numéro de dépôt international: FR9802723
(87) Numéro de publication internationale: WO99031405

(56) Documents cités:
- DE-A- 4 420 178
- FR-A- 2 601 102
- GB-A- 2 288 652

## Description

La présente invention concerne les amortisseurs de torsion, notamment les doubles volants amortisseurs de torsion pour véhicules automobiles.

Un tel amortisseur est décrit par exemple dans le document DE-A-19 21 972 et comporte deux parties coaxiales montées mobiles en rotation l'une par rapport à l'autre à l'encontre d'organes élastiques lubrifiés montés dans une cavité étanche portée en majeure partie par une première des parties coaxiales.

Cette cavité est fermée par un joint dynamique d'étanchéité fixé sur une pièce de support appartenant à la première partie coaxiale.

Le joint est implanté radialement entre la pièce de support et une portée annulaire de contact appartenant à la deuxième des parties coaxiales.

Le joint comporte une lèvre en accordéon frottant contre cette portée de contact. La forme de la lèvre est influencée par les tolérances de fabrication.

D'une manière générale la lèvre du joint, en fonctionnement, glisse sur la portée de contact avec une force qui dépend des tolérances de fabrication.

La présente invention a pour objet de pallier de manière simple et économique cet inconvénient.

Le document FR-A-2 601 102 montre un amortisseur de torsion comprenant un joint d'étanchéité pour assurer l'étanchéité d'une cavité étanche.

Le but de l'invention est de s'affranchir des tolérances de fabrication pour pouvoir contrôler de manière précise le glissement du joint d'étanchéité dynamique.

L'invention est définie par un amortisseur de torsion selon la revendication 1.

Grâce à l'invention la pièce d'étanchéité est montée à jeu radial par rapport à sa pièce de support. Cette pièce d'étanchéité, au montage, est enfilée sur la portée de contact.

Ainsi de manière simple et économique on s'affranchit des tolérances de fabrication du fait que le joint est déplaçable axialement et radialement.

En outre les branches de la pièce d'étanchéité viennent se serrer, de préférence localement, sur la pièce porteuse en sorte que ce serrage, du type axial, est indépendant du serrage, du type radial, existant entre la pièce d'étanchéité et la portée de contact.

Avantageusement on privilégie le serrage sur la pièce porteuse, le serrage existant entre la pièce d'étanchéité et la portée de contact étant plus important, en sorte qu'aucun mouvement relatif en fonctionnement ne se produit entre la pièce d'étanchéité et la portée de contact.

Un mouvement relatif se produit entre les branches et la pièce porteuse. La première branche constitue donc un élément d'étanchéité glissant sur son siège associé et ce de manière contrôlée.

Le serrage des branches sur la pièce porteuse est donc inférieur au serrage existant entre la pièce d'étanchéité et la portée de contact.

Plusieurs modes de réalisation sont envisageables.

Dans un premier mode de réalisation, les branches sont venues d'un seul tenant de la pièce d'étanchéité avantageusement en matière moulable. Une lèvre effilée constitue la première branche et permet de contrôler le serrage.

Cette solution est économique car elle fait appel à un nombre minimum de pièces.

Dans un second mode de réalisation la première branche consiste en un clinquant distinct de la pièce d'étanchéité. Dans ce cas on contrôle mieux le serrage, le siège consistant en une surface inclinée.

Dans les deux cas l'autre branche est constituée par la périphérie d'un anneau, la pièce d'étanchéité étant en forme de peigne avec au moins deux dents d'orientation axiale issues de l'anneau. L'une des dents porte l'élément d'étanchéité (la lèvre ou le clinquant) et l'autre dent, implantée radialement en dessous de la première dent, constitue une lèvre d'orientation axiale en contact avec la portée de contact pour assurer une étanchéité et un serrage énergique entre la pièce d'étanchéité et la pièce de contact et interdire en fonctionnement tout mouvement relatif et donc tout glissement entre la pièce d'étanchéité et la portée de contact.

Dans un autre mode de réalisation la pièce d'étanchéité porte de manière équilibrée deux clinquants métalliques inclinés en sens inverse.

Dans tous les cas, au montage, la pièce d'étanchéité peut se déplacer axialement et radialement pour occuper la position souhaitée.

L'élément d'étanchéité (la lèvre souple ou le clinquant souple) peut exercer la charge requise sur son siège sans subir de contraintes liées aux tolérances de fabrication.

Avantageusement la portée de contact appartient à une pièce métallique de contact. Cette pièce de contact permet d'allonger le trajet allant du plateau de réaction à la pièce d'étanchéité, qui ainsi est moins chaude. En variante, la pièce de contact est en matière thermiquement isolante pour mieux protéger encore la pièce d'étanchéité.

En inclinant la pièce de contact, on peut éloigner axialement la portée de contact du plateau de réaction, ce qui permet également de réduire le transfert de chaleur entre la pièce d'étanchéité et le plateau de réaction.

Grâce à la pièce de contact la portée de contact, dans une forme de réalisation, consiste en une jupe annulaire d'orientation axiale que l'on peut serrer à l'aide de deux lèvres appartenant à la pièce d'étanchéité. Ces lèvres peuvent présenter chacune à leur extrémité libre un bourrelet pour contact local avec la jupe.

L'écart entre les deux bourrelets est inférieur à l'épaisseur de la jupe pour effectuer par pincement le serrage requis de la jupe. Dans tous les cas au montage, la pièce de contact est portée par la pièce d'étanchéité montée à déplacement radial par rapport à la pièce porteuse. Lors de ce montage, on peut fixer en final la pièce porteuse sur la deuxième ou la première masse selon les cas.

La pièce de contact présente, dans une forme de réalisation, un premier tronçon transversal pour sa fixation sur la masse concernée, un tronçon incliné vers l'intérieur de la cavité se raccordant d'une part au premier tronçon et d'autre part à un deuxième tronçon transversal portant la jupe et permettant l'implantation d'une lèvre de la pièce d'étanchéité en-dessous de la jupe.

La pièce de contact est ainsi peu coûteuse et permet, grâce à sa forme, d'allonger encore le chemin entre le plateau de réaction et la pièce d'étanchéité pour une bonne évacuation de la chaleur.

Bien entendu un jeu axial existe entre la pièce d'étanchéité et l'extrémité libre de la jupe pour pouvoir effectuer un positionnement au montage.

La pièce de contact à jupe de contact permet également de réduire l'encombrement radial, une lèvre pouvant être en contact avec la périphérie interne de la jupe.

Les organes élastiques peuvent être implantés à la périphérie externe de l'amortisseur de torsion. Dans le cadre d'une application à un double volant amortisseur de torsion, la cavité étanche est alors portée par la première masse. Lorsque les organes élastiques sont implantés radialement en dessous de la face de friction du plateau de réaction, la cavité étanche peut être alors portée par la deuxième masse.

Les organes élastiques peuvent être d'orientation radiale pour la position de repos de l'amortisseur de torsion.

Dans tous les cas, le joint selon l'invention est auto-positionneur au montage.

La description qui va suivre illustre l'invention en regard des dessins annexés dans lesquels :
- la figure 1 est une demi-vue en coupe axiale d'un amortisseur de torsion selon l'invention sans la forme d'un double volant amortisseur ;
- la figure 2 est une vue partielle de face du double volant selon la revendication 1 sans la deuxième masse et le couvercle ;
- la figure 3 est une vue partielle montrant la périphérie externe de la rondelle de frottement de la figure 1, ainsi qu'une saillie d'entraînement ;
- la figure 4 est une vue à plus grande échelle du joint d'étanchéité dynamique de la figure 1 ;
- les figures 5 à 7 sont des vues analogues à la figure 4 pour d'autres exemples de réalisation.

L'amortisseur de torsion représenté dans les figures comporte deux parties coaxiales 1,2 montées rotatives l'une par rapport à l'autre à l'encontre d'organes élastiques lubrifiés 3 et d'un dispositif de frottement 4.

Les organes élastiques 3 sont montés dans une cavité étanche 5 remplie au moins partiellement d'un agent pâteux ou visqueux, ici de la graisse, pour augmenter la durée de vie des organes élastiques, réduire les usures et obtenir un meilleur fonctionnement de l'amortisseur de torsion comme décrit par exemple dans le document DE-A-28 48 748 auquel on pourra se reporter pour plus de précisions.

La cavité 5 est délimitée en majeure partie par des pièces appartenant à l'une des parties coaxiales 1,2 et est rendue étanche ici à l'aide de deux joints d'étanchéité dynamique 6,7 intervenant chacun entre une première pièce appartenant à l'une des parties coaxiales 1,2 et une deuxième pièce appartenant à l'autre desdites parties.

Les organes élastiques 3 sont dans les figures à action circonférentielle et consistent ici en une pluralité de ressorts à boudin 3 répartis régulièrement circonférentiellement.

Les ressorts 3 sont implantés à la périphérie externe de l'amortisseur de torsion, tandis que le dispositif de frottement 4 est implanté radialement en dessous des ressorts 3.

Les deux joints d'étanchéité dynamique 6,7 sont décalés radialement l'un par rapport à l'autre.

L'un 6 de ces joints 6,7 consiste en un palier 6 par l'intermédiaire duquel l'une des parties coaxiales 1,2 est montée rotative sur l'autre. L'autre joint 7 est, selon l'invention, déplaçable radialement et axialement au montage c'est-à-dire lors de l'assemblage de l'amortisseur de torsion.

Le dispositif de frottement 4 peut être à action radiale comme décrit par exemple dans le document FR-A-2 688 564. Dans ce cas il comporte un bloc en matière élastique, tel que de l'élastomère, interposé sous précontrainte entre deux bagues, dont une au moins est fendue.

Chaque bague, décalée radialement par rapport à l'autre, est en contact avec une portée axiale. L'une des portées appartient à l'une des parties coaxiales et l'autre portée à l'autre partie coaxiale.

En fonctionnement le bloc élastique est comprimé et ensuite l'une des bagues frotte contre sa portée associée.

Le dispositif de frottement 4 peut être à action axiale. Dans ce cas le bloc en matière élastique peut être interposé sous précontrainte entre une portée radiale appartenant à l'une des parties et une portée radiale appartenant à l'autre des parties.

Ce dispositif de frottement 4 peut être implanté radialement au même niveau que le palier 6. Dans ce cas, on voit que le bloc en matière élastique du dispositif de frottement peut, lorsqu'il n'est pas troué, assurer l'étanchéité en sorte que le palier 6 n'assure pas forcément l'étanchéité.

Le palier 6 est alors à l'extérieur de la cavité 5 fermée intérieurement de manière étanche par le dispositif de frottement 4.

Bien entendu le dispositif de frottement 4 peut comporter une rondelle de frottement, une rondelle élastique à action axiale prenant appui sur l'une des parties pour action sur une rondelle d'application et serrage de la rondelle de frottement entre la rondelle d'application et une portée transversale appartenant à l'une des parties coaxiales : la rondelle de frottement étant adaptée à être entraînée en rotation par l'autre des parties coaxiales.

Un tel dispositif 4 équipe l'amortisseur de torsion représenté dans les figures. Cet amortisseur consiste en un double volant amortisseur de torsion comportant deux parties coaxiales 1,2 sous la forme de masses coaxiales 1,2 tournantes autour de l'axe de symétrie axial X-X' du double volant, qui est ici du type de celui décrit dans le document FR-B-2 687 442.

Ainsi ce double volant comporte une première masse 1 destinée à être fixée sur le vilebrequin du moteur à combustion interne du véhicule automobile à l'aide de vis (non représentées) traversant des passages 17 réalisés dans un moyeu central 16, que présente intérieurement la première masse 1.

La deuxième masse 2 comporte un plateau 20, ici en fonte, formant le plateau de réaction 20 d'un embrayage à friction. Ce plateau 20 présente, du côté opposé à la première masse 1, une face de friction 22 pour un disque de friction solidaire de l'arbre d'entrée de la boîte de vitesses.

L'embrayage à friction comporte également un mécanisme d'embrayage comprenant, le plus souvent, de manière unitaire un couvercle de forme creuse, dont le fond sert d'appui à un diaphragme agissant sur un plateau de pression, lié en rotation au couvercle avec mobilité axiale par l'intermédiaire de languettes élastiques, pour serrage des garnitures de friction du disque de friction entre le plateau de réaction 20 et le plateau de pression. Les garnitures de friction sont accouplées à un moyeu interne du disque de friction. Ce moyeu est calé en rotation sur l'arbre d'entrée de la boîte de vitesses.

Ainsi la seconde masse 2 est destinée à être liée en rotation de manière débrayable à l'arbre d'entrée de la boîte de vitesses, sachant que l'embrayage à friction est normalement engagé et que pour désengager celui-ci il faut agir selon le cas à l'aide d'une butée de débrayage en poussée ou en traction sur l'extrémité interne des doigts du diaphragme pour annuler la charge qu'exerce le diaphragme sur le plateau de pression et libérer les garnitures de friction.

Bien entendu le couvercle se fixe à la périphérie externe du plateau de réaction 20 et les languettes élastiques permettent de libérer les garnitures de friction lorsque l'embrayage est désengagé.

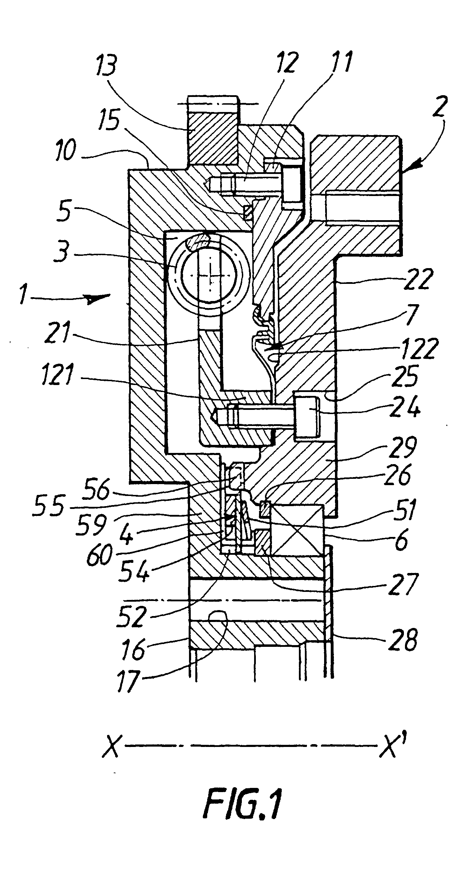

A la figure 1 on voit en 23 un rebord périphérique externe taraudé sur lequel se fixe le couvercle.

La seconde masse 2 comporte centralement un moyeu externe 29 entourant en partie le moyeu central 16 et est montée rotative sur la première masse 1 par l'intermédiaire d'un palier anti-friction 6 en forme de roulement à billes étanche interposé radialement entre la périphérie externe du moyeu central 16 et la périphérie interne du moyeu externe 29, ici d'un seul tenant avec le plateau de réaction 20.

La première masse 1 comporte en outre des pièces annulaires métalliques à savoir un flasque 14 d'orientation transversale et étanche, un rebord 10, en forme de couronne d'orientation axiale, porté par la périphérie externe du flasque 14, et un couvercle 11 d'orientation transversale fixé de manière étanche sur l'extrémité libre du rebord 10, ici à l'aide de vis 12 en variante par sertissage.

Le couvercle 11 est adjacent au plateau de réaction 20 et s'étend parallèlement à celui-ci et au flasque 14.

La hauteur du couvercle 11 est inférieure à celle du flasque 14. Ce couvercle 11 est ainsi troué centralement, tandis que le flasque 14 est à sa périphérie interne d'un seul tenant avec le moyeu central 16 et à sa périphérie externe d'un seul tenant avec le rebord 10.

A la figure 1 on voit en 15 le joint d'étanchéité statique intervenant entre le couvercle 11 et le rebord 10, portant la couronne de démarreur dentée 13 propre à être entraînée par le démarreur du véhicule.

Ainsi le flasque 14 avec son rebord 10 et son moyeu 16 forme un boîtier étanche et délimite en majeure partie avec le couvercle 11 la cavité étanche 5 portée en majeure partie par la première masse 1. Cette cavité 5 est délimitée intérieurement par la seconde masse 2 portant un voile annulaire 21 à section en forme de L avec une base 121. Le voile 21 est doté de bras radiaux 31 à sa périphérie externe pour interférence et appui sur les organes élastiques 3 à action circonférentielle.

Les organes élastiques 3 consistent en une pluralité de ressorts à boudin 3 courbes de grande longueur s'appuyant sur des blocs 32 saillants axialement en vis-à-vis, solidaires du couvercle 11 et du flasque 14, par exemple par rivetage étanche ou soudage.

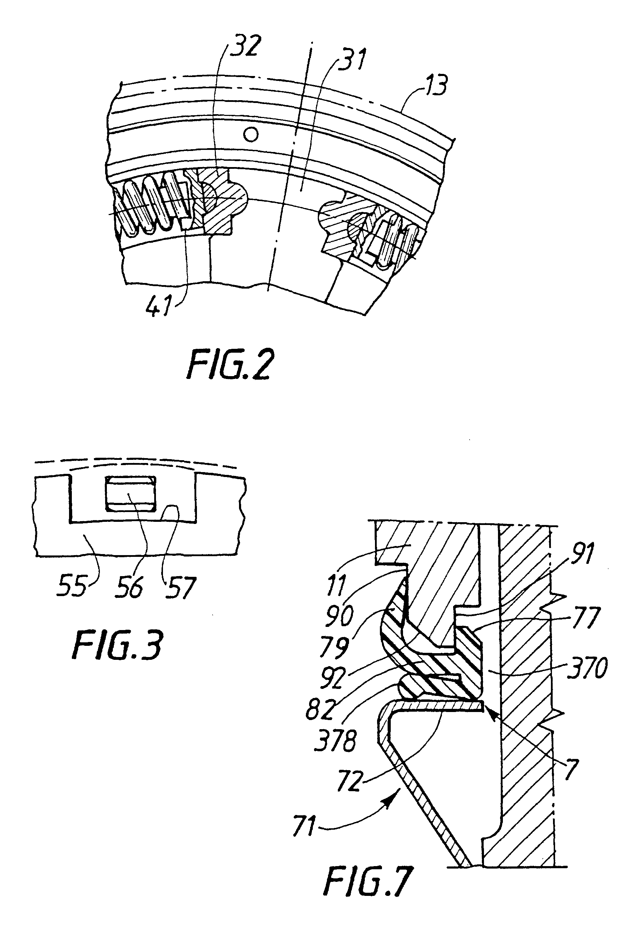

Les blocs 32 sont échancrés (figure 2) pour coopérer avec des socles 41 servant d'appui aux extrémités des ressorts 3. Les ressorts 3, avec leurs socles d'extrémité 41, sont montés sans jeu entre les blocs 32, et avec jeu par rapport aux bras 31, également échancrés pour coopérer avec la face dorsale bombée des socles 41 pivotant en fonctionnement.

Bien entendu pour la position de repos du double volant, en variante, les socles 41 peuvent être montés sans jeu par rapport aux bras 31. De même en variante le rebord 10 peut être rapporté par exemple par sertissage, rivetage, soudage ou vissage étanche sur le flasque 14. Le rebord 10 forme alors une entretoise entre le flasque 14 et le couvercle 11, des rivets pouvant traverser le rebord 10 pour assembler le couvercle 11 au flasque 14.

Dans tous les cas les ressorts 3 s'étendent à la périphérie externe de la cavité 5, ici radialement au voisinage de la périphérie interne du rebord 10.

La base 121, en forme de couronne annulaire d'orientation axiale, du voile 21 est fixée par des vis 24 au plateau de réaction 20 radialement au dessus du moyeu externe 29 saillant axialement en direction du flasque 14 par rapport à la périphérie interne du plateau de réaction 20.

Les vis 24 sont chacune engagées dans un lamage 25 réalisé dans le plateau de réaction 20. En variante la fixation de la couronne (la base) 121 est réalisée par rivetage ou un autre moyen.

Le moyeu externe 29 est intérieurement épaulé pour appui de la bague externe du roulement 6 engagée dans l'alésage interne du moyeu 29 et calée axialement dans un sens par ledit épaulement, adjacent à la face 22, et dans l'autre sens par un circlips 26 engagé dans une gorge interne (non référencée) du moyeu 29.

La bague interne du roulement étanche 6 est calée axialement, dans un sens, par une rondelle 28 servant d'appui aux têtes des vis de fixation (non représentées) de la première masse 1 au vilebrequin du véhicule automobile, et, dans l'autre sens, par une rondelle 27 calée axialement sur une surépaisseur 52 que présente le moyeu 16 à sa périphérie externe au voisinage du flasque 14.

La seconde masse 2 est ainsi calée axialement sur la première masse 1 en étant également montée rotative sur la première masse 1.

Bien entendu le roulement 6 peut avoir deux rangées de billes avec des moyens d'étanchéité à au moins l'une de ses extrémités.

Le dispositif de frottement 4, ici à action axiale, entoure le moyeu central 16 et est implanté axialement entre la rondelle 27 et un flasque porteur 59 parallèle au flasque 14 et d'un seul tenant avec celui-ci.

Le flasque 59 s'étend à la périphérie interne du flasque 14. Le flasque 59, décalé axialement en direction du plateau 20 par rapport au flasque 14, appartient à un nez annulaire central comportant le moyeu 16.

La périphérie interne du flasque 14 est donc étagée, le flasque 59 s'étendant globalement dans le plan dû voile 21.

Le dispositif de frottement 4 comporte une cage 60 métallique avec une portion transversale, dont une face est au contact de la face du flasque 59 tournée vers le roulement 6, et dont l'autre face sert de portée à la rondelle de frottement 54 conformée pour engrener à jeu circonférentiel avec des saillies axiales 56, que présente l'extrémité libre du moyeu externe 29. Les saillies 56 s'étendent radialement en dessous de la couronne 121 et des vis 24 et radialement au-dessus du roulement 6 et de la rondelle 26. La rondelle de frottement 54 présente pour ce faire une surépaisseur à sa périphérie externe des échancrures 57 dans lesquelles pénètrent à jeu circonférentiel les saillies 56.

Une rondelle d'application 53 est sollicitée en contact avec l'autre face de la rondelle de frottement 54, par l'intermédiaire d'une rondelle élastique à action axiale - ici une rondelle Belleville 51 - prenant appui sur un rebord transversal de faible hauteur que présente la cage 60 à son extrémité adjacente à la rondelle 27. La cage 60 présente à sa périphérie interne une douille (non référencée) d'orientation axiale emmanchée à force sur la périphérie externe de la surépaisseur 52 du moyeu central 16. Cette surépaisseur 52 présente des rainures (non référencées) dans lesquelles pénètrent de manière complémentaire des pattes radiales (non référencées) issues de la périphérie interne de la rondelle d'application 53, qui ainsi est liée en rotation avec mobilité axiale à la surépaisseur 52 et au moyeu 16.

Bien entendu la douille de la cage 60 est en forme de peigne pour laisser passer les pattes de la rondelle 53 et le rebord d'extrémité de la cage 60 est en contact avec la rondelle 27 en étant de faible hauteur radiale pour servir d'épaulement à la périphérie interne de la rondelle Belleville 51, avantageusement fragmentée en pattes radiales à sa périphérie interne pour faciliter son montage dans la cage 60.

Le dispositif de frottement 4 forme donc une cassette unitaire emmanchée à force par la douille de sa cage 60 sur la surépaisseur 52.

Bien entendu, en variante, le dispositif de frottement 4 peut être du type de celui décrit dans le document FR-A-2 687 442 précité.

Ce dispositif 4 est monté dans la cavité étanche 5. En variante ce dispositif de frottement peut être monté à l'extérieur de la cavité étanche 5 comme décrit dans le document FR-A-2 698 939.

Le roulement 6 est alors implanté axialement entre le flasque porteur 59 et le dispositif de frottement 4.

Dans ce cas on peut inverser les structures, la rondelle de frottement présentant à sa périphérie externe au moins une saillie engrenant avec ou sans jeu circonférentiel avec une échancrure réalisée dans le moyeu externe 29. La rondelle de frottement 54 est entraînée avec ou sans jeu circonférentiel par une saillie ou une échancrure de la seconde masse pour frotter contre la rondelle d'application 53 et une portée de frottement solidaire de la première masse 1, sachant qu'en variante, la cage 60 peut être supprimée. La rondelle 54, entraînée en rotation, par la seconde masse 2, frotte donc contre des portées de frottement solidaires en rotation de la première masse 1. La cavité 5 est fermée de manière étanche par le palier 6 (figure 1). Cette cavité 5 est délimitée intérieurement par le moyeu externe 29 de la seconde masse 2, c'est-à-dire la périphérie interne de la seconde masse 2.

La cavité 5 est, radialement au-delà du moyeu 29, fermée de manière étanche par le joint dynamique 7 axialement glissant au montage pour rattraper les jeux entre le couvercle 11 et la seconde masse 2. Ce joint 7 est également déplaçable radialement au montage et est du type radial. Le joint 7 s'étend à distance de la face frontale 122 du plateau 20 opposée à la face 22. Le joint 7 comporte dans tous les cas une pièce d'étanchéité de forme annulaire, référencée en 70 dans les figures 1 à 4, et montée sur une pièce 71 (figures 1 à 4) présentant une portée de contact 72, appartenant à une jupe de contact 72.

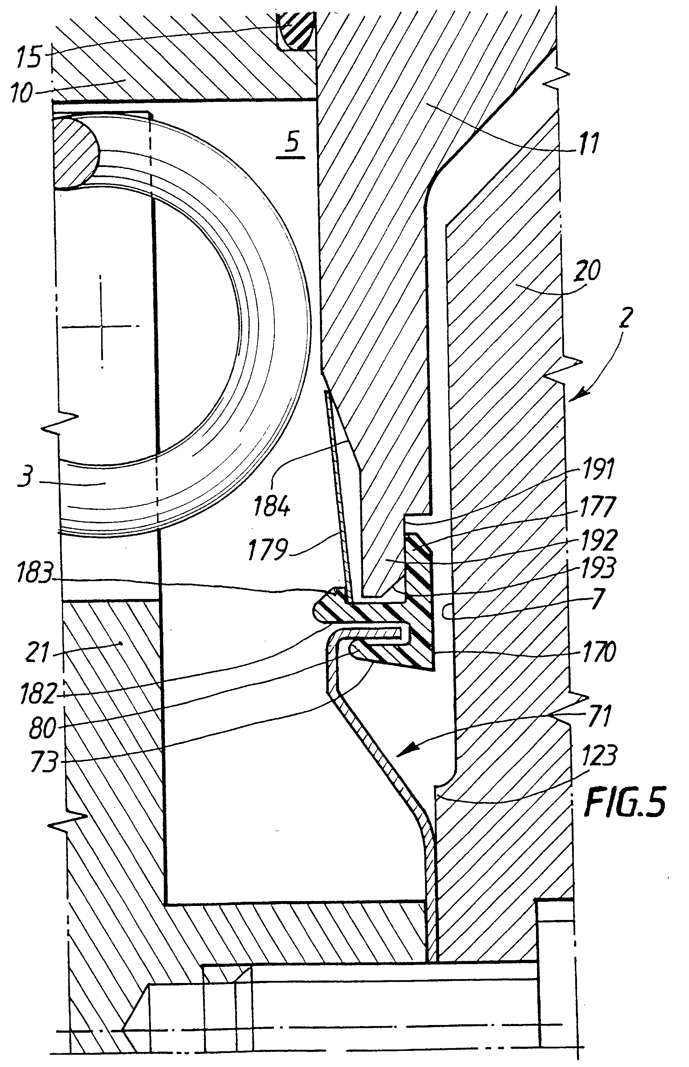

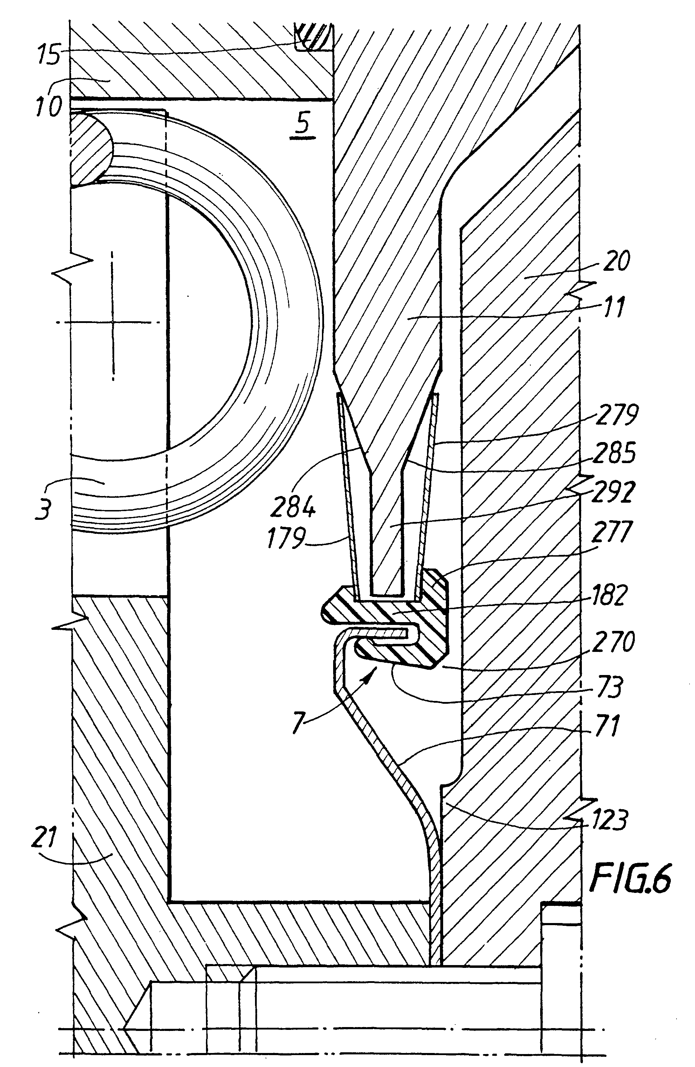

La pièce d'étanchéité 70,170 (figure 5), 270 (figure 6), 370 (figure 7) est portée par l'une des masses (1,2) tandis que la pièce 71 est portée par l'autre des masses 1,2.

Dans les figures représentées la pièce 71 est métallique et est solidaire de la deuxième masse 2, tandis que la pièce d'étanchéité est portée par la première masse 1 et est en matière plastique moulable.

La pièce d'étanchéité est portée dans les figures par le couvercle 11. Elle s'engage dans l'ouverture centrale du couvercle 11, en étant montée à la périphérie interne du couvercle 11.

Grâce à la pièce 71, on peut réduire la hauteur du couvercle 11 et la pièce d'étanchéité est à distance axiale de la face frontale 122 du plateau de réaction 20 opposée à la face de friction 22.

C'est pour cette raison que la pièce d'étanchéité peut être en matière plastique moulable bon marché car elle est éloignée de la face de friction 22. Cette pièce d'étanchéité est en contact avec une jupe annulaire 72 d'orientation axiale que présente la pièce 71 à sa périphérie externe. Pour ce faire la pièce d'étanchéité comporte au moins une lèvre d'orientation axiale 73,78 (figures 1 à 6), 378 (figure 7) pour coopérer de manière étanche avec la jupe 72, dite jupe de contact, de la pièce 71, dite pièce de contact.

La pièce d'étanchéité comporte deux branches, s'étendant de part et d'autre du couvercle 11 pour venir se pincer de manière contrôlée sur le couvercle 11 formant un support pour la pièce d'étanchéité.

La pièce d'étanchéité est ainsi fixée par pincement sur le couvercle 11.

Le joint 7 avec sa pièce d'étanchéité s'étend radialement au-dessus du dispositif de frottement 4, du roulement étanche 6 et du moyeu externe 29. Le joint 7 se pince sur la périphérie interne du couvercle 11.

La pièce de contact 71, portée par la deuxième masse 2, est intercalée à serrage à sa périphérie interne entre la base 121 du voile 21 et la face frontale 122 du plateau de réaction 20. Cette pièce de contact 71 présente à sa périphérie interne un premier tronçon transversal de fixation 74 par l'intermédiaire duquel elle est pincée à fixation entre la base 121 et la face frontale 122 présentant à cet endroit une surépaisseur 123 formant bossage.

C'est grâce à ce bossage 123 que la pièce d'étanchéité est écartée axialement de la face 122 chaude en utilisation.

Le premier tronçon 74 est traversé par les vis 24 qui assemblent le voile 21 au plateau de réaction 20 et fixent ainsi la pièce de contact 71. La jupe 72 s'étend à la périphérie externe de la pièce de contact métallique 71 et est dirigée axialement vers le plateau de réaction 20.

La jupe 72 se raccorde à un deuxième tronçon transversal 76, lui-même se raccordant par un tronçon incliné 75 au premier tronçon transversal 74 de fixation. La jupe 72, grâce au tronçon incliné 75, est ainsi décalée axialement par rapport au premier tronçon 74 et ce en direction du voile 21 et du flasque 14. La jupe 72 est donc décalée axialement par rapport à la face 122.

Le deuxième tronçon 76 permet de bien raccorder la jupe 72 au tronçon incliné 75.

Dans le premier mode de réalisation (figures 1 à 4) la pièce d'étanchéité 70, de forme annulaire, comporte un anneau continu 77 d'orientation transversale d'où sont issues trois lèvres 73,78,79 souples d'étanchéité.

La pièce 70 est en forme de peigne.

Les lèvres 73,78,79 sont décalées radialement les unes par rapport aux autres et sont implantées dans la cavité 5. La lèvre 73 est destinée à venir en contact ferme avec la périphérie interne de la jupe 72, tandis que la lèvre 78 est destinée à venir en contact ferme avec la périphérie externe de la jupe 72. Les lèvres 73,78 sont dirigées axialement vers le voile 21 et le flasque 14. Chaque lèvre axiale 73,78 présente à son extrémité libre un bourrelet 80,81 pour contact ponctuel étanche avec la jupe 72. Les bourrelets 80,81 s'étendent en vis-à-vis.

Ainsi qu'on l'aura compris la fente séparant les deux lèvres 73,78 a une largeur supérieure à l'épaisseur de la jupe 72. Cette fente a à son extrémité libre, formée par les bourrelets 80,81, une largeur légèrement inférieure à l'épaisseur de la jupe 72. Les bourrelets 80,81 ont une forme arrondie et pincent la jupe 72 introduite par enfilage axial entre les lèvres 73,78, qui ici sont souples. La lèvre 79 est issue d'une portion annulaire d'orientation axiale 82 dirigée axialement vers le voile 21 et le flasque 14.

Cette lèvre 79 souple est dirigée globalement radialement vers l'extérieur et se raccorde par un coude 83 arrondi à la portion 82 globalement parallèle aux lèvres 78,73. La lèvre 79 est effilée à son extrémité libre, qui a ainsi une épaisseur moindre que la portion 82. La lèvre 79 s'étend radialement au-dessus de l'anneau 77, ici d'orientation transversale, et vient en contact avec un épaulement transversal 90 que présente intérieurement la face du couvercle 11 tournée vers les ressorts 3 et le flasque 14.

L'épaulement 90 constitue un siège d'étanchéité pour la lèvre 79 formant élément d'étanchéité.

L'anneau 77 est à sa périphérie externe en contact avec un épaulement 91 transversal constituant un siège et formé à la périphérie interne de la face du couvercle 11 tournée vers le plateau de réaction 20. L'anneau 77 et la lèvre 79 forment les deux branches de la pince précitée portée d'un seul tenant par la pièce d'étanchéité.

Ainsi le couvercle 11 présente à sa périphérie interne une collerette 92 d'épaisseur réduite et dirigée radialement vers l'axe X-X'. Cette collerette 92 est délimitée transversalement par l'épaulement 91 et l'épaulement 90 s'étendant radialement au-dessus de l'épaulement 91. Cette collerette 92 est chanfreinée en 93. Ce chanfrein 93 relie l'épaulement 90 à la périphérie interne de la collerette 92 et évite toute interférence entre la lèvre souple 79 et la périphérie interne de la collerette 92, qui est ainsi échancrée sur chacune de ses faces à sa périphérie interne.

Ainsi qu'il ressort à l'évidence de la description et des dessins la lèvre d'étanchéité 79 est à action axiale, tandis que les lèvres 73,78 sont des lèvres d'étanchéité à action radiale grâce aux bourrelets 80,81 dirigés radialement l'un vers l'autre.

La lèvre 79 est une lèvre d'étanchéité et d'assemblage permettant, par appui sur l'épaulement 90, de plaquer la face de l'anneau 77, tournée vers le flasque 14 et l'intérieur de la cavité 5, contre l'épaulement 91.

Un jeu radial existe suivant une caractéristique entre la portion 82 et la périphérie interne de la collerette 92. La pièce d'étanchéité 70 est ainsi montée par avance sur la collerette 92 et porte par avance la pièce de contact 71 par pincement de la jupe 72.

Bien entendu les lèvres 73 et 78 peuvent avoir une longueur différente, la lèvre 78 étant plus longue que la lèvre 73.

Au montage on place les ressorts 3, avec leurs socles 41, ainsi que le voile 21,121 et le dispositif de frottement 4 à cassette dans le boîtier défini par le flasque 14 avec son rebord 10 et son nez central à moyeu central 16.

On introduit la graisse, qui remplit partiellement la cavité 5, puis on fixe le couvercle 11, équipé de la pièce d'étanchéité 70 et de la pièce de contact, sur le rebord 10 à l'aide des vis 12. Ensuite on monte la seconde masse avec le roulement 6 sur le moyeu 16 avec mise en place par avance de la rondelle 27. Enfin on fixe le voile 21 et la pièce de contact au plateau de réaction 20 grâce aux vis 24. Ceci est facile à réaliser car la pièce d'étanchéité 70, portant la pièce de contact 71, peut se déplacer au montage radialement par rapport à la collerette 92 et au couvercle 11 porteur.

Le joint 7 peut également par sa pièce d'étanchéité 70 glisser au montage axialement sur la jupe 72, un jeu axial existant entre l'extrémité libre de la jupe 72 et l'anneau 77.

Ainsi on peut rattraper les tolérances de fabrication et les jeux entre le couvercle 11 de la masse primaire 1 et le plateau de réaction 20 de la masse secondaire 2.

Le frottement entre le couvercle 11 et la pièce d'étanchéité 70 est indépendant du frottement entre la pièce d'étanchéité 70 et la pièce de contact 71. La lèvre 79 en utilisation glisse et frotte sur le couvercle 11 avec la force désirée, tandis qu'aucun mouvement relatif se produit en utilisation entre la jupe 72 et la pièce 70.

Ici on s'arrange pour que le glissement, en utilisation, soit réalisé entre la lèvre 79 et le couvercle 11. C'est pour cette raison que la lèvre d'étanchéité 79 présente cette forme. Cette lèvre 79 et l'anneau 77 sont en contact glissant avec la collerette 92.

Cela est facile à réaliser, car grâce aux bourrelets 80,81, on peut serrer énergiquement la jupe 72 en sorte que le frottement se produit entre la pièce d'étanchéité 70 et le couvercle 11, la lèvre 79 à action axiale et l'anneau 77 glissant au contact des épaulements 90,91. En outre la lèvre 79 est, de par sa forme, plus souple que les lèvres 78,73 à action radiale. Grâce au coude 83 on maîtrise bien le serrage axial de la lèvre 79. Ainsi le joint 7, du type radial, est à action axiale.

En variante, figure 5, la lèvre 79 peut être remplacée par un clinquant d'étanchéité 179 métallique à action axiale plus mince que la pièce de contact 71 inchangée. Ce clinquant 79 est donc souple et flexible.

Dans ce cas l'anneau 177 transversal de la pièce d'étanchéité 170 est simplifié et ne comporte que la lèvre d'étanchéité 73 à action radiale avec son bourrelet 80 destiné à coopérer avec la périphérie interne de la jupe 72. Le clinquant 179 est axialement élastique et est distinct de la pièce d'étanchéité 170 en étant porté par celle-ci. Les deux branches de la pince sont formées par le clinquant 79 et l'anneau 177 d'un seul tenant avec la pièce 170. La lèvre supérieure 78 est supprimée.

L'anneau continu 177 porte des pattes élastiquement déformables 182 et d'orientation axiale dirigées vers l'intérieur de la cavité 5 et le flasque 14. L'extrémité libre des pattes 182 présente des crans 183 dirigés radialement vers le couvercle 11 et formant un épaulement transversal pour la périphérie interne du clinquant 179, dont la périphérie externe s'appuie sur une face inclinée 184 du couvercle 11 se raccordant à sa périphérie interne a une face transversale 190 délimitant, à la périphérie interne du couvercle 11, une collerette 192 d'épaisseur réduite.

La face 184 forme un siège d'étanchéité pour le clinquant 179 constituant un élément d'étanchéité. Le clinquant plaque élastiquement l'anneau 177 (la face de celui-ci dirigée vers la cavité 5) au contact de la face transversale 191 formant un siège et délimitant également la collerette radiale 192 dirigée radialement vers l'intérieur et l'axe X-X'.

Un chanfrein 193 relie la face transversale 191, formant épaulement, à la périphérie interne de la collerette 192 pour éviter toute interférence avec les pattes 182. En variante les pattes 182 peuvent être remplacées par un anneau continu, le cran 183 étant alors continu.

Bien entendu (figure 6) la collerette 292 peut avoir une forme symétrique et être délimitée par deux faces transversales identiques 290,291 prolongées à leur périphérie externe par deux faces inclinées en sens inverse 284,285, formant siège, pour appui chacune de la périphérie externe respectivement du clinquant d'étanchéité 179 et d'un clinquant 279 élastiquement axialement et incliné en sens inverse et s'appuyant sur la périphérie externe de l'anneau 277 moins haut que l'anneau 177.

La pièce d'étanchéité 270 est encore simplifiée.

Dans ces figures la pièce d'étanchéité 170,270 est associée à au moins un clinquant supplémentaire.

En variante on peut supprimer la lèvre 73 de la figure 1.

Dans ce cas (figure 7) la lèvre 378 de la pièce d'étanchéité 370 est en contact avec la périphérie externe de la jupe 72 et avec la périphérie interne de la portion 82.

La lèvre 378 est d'orientation axiale et est en contact ponctuel à son autre extrémité avec l'extrémité libre de la jupe 72.

On appréciera que le deuxième tronçon 74 permet le logement de la lèvre d'étanchéité inférieure 73. La hauteur de ce tronçon est déterminée par l'épaisseur de la lèvre 73.

Bien entendu comme visible à la figure 7 la jupe 72 peut être inclinée légèrement axialement pour mise sous précontrainte de la lèvre 378.

La pièce de contact pourrait être en variante constituée par une collerette d'orientation axiale issue d'un bossage du plateau de réaction 20 et donc de la deuxième masse 2. Cette collerette constitue la portée de contact.

Dans tous les cas la pièce d'étanchéité est montée mobile radialement par rapport à la périphérie interne du couvercle 11 porteur, présentant intérieurement une collerette 92,192,292, avec un jeu radial entre la pièce d'étanchéité et la périphérie interne de ladite collerette interne. La pièce d'étanchéité 70,170,270,370 en matière plastique est montée directement sur la collerette 92 ou indirectement sur la collerette 192,292 par l'intermédiaire de clinquants 179,279 ; cette pièce pouvant ne pas être en contact avec la collerette 292 (figure 6).

On appréciera que la pièce de contact 71 (figures 1 à 7) permet de réduire la température au niveau de la pièce d'étanchéité, qui peut être en matière plastique moins coûteuse. Cette pièce réduit également la température au niveau des ressorts 3 et donc de l'agent pâteux ou visqueux, usuellement de la graisse, remplissant ici partiellement la cavité 5 pour lubrifier les ressorts 3.

En effet, grâce à la pièce de contact métallique 71, on allonge la distance entre le plateau de réaction 20 et la pièce d'étanchéité, ce qui permet d'évacuer plus de chaleur.

Les clinquants 179,279 sont plats à l'état libre et inclinés après montage sur le couvercle 11 pour être en contact élastique avec celui-ci. Ce sont les clinquants qui assurent l'étanchéité et frottent en combinaison ou pas avec l'anneau 177,277 sur le couvercle 11. Le frottement entre le couvercle 11 et la lèvre 79 et/ou les clinquants 179,279 est constant du fait que l'on peut éliminer les contraintes dues aux tolérances de fabrication.

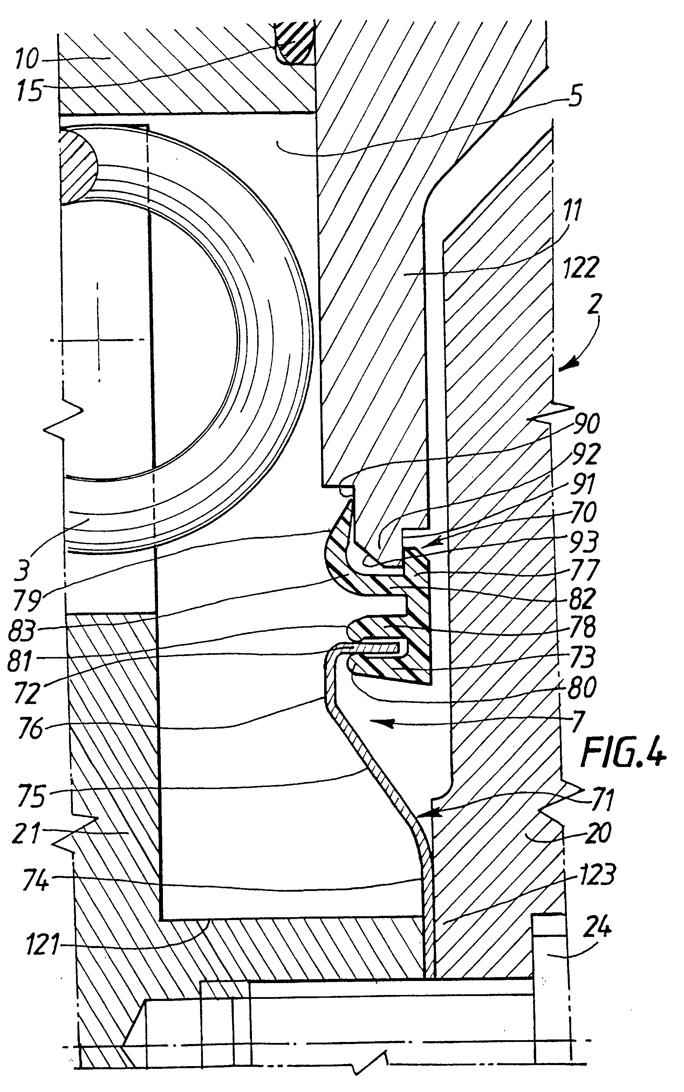

On appréciera que dans les figures 5 et 6 l'encombrement radial est réduit du fait de l'absence de la lèvre 78 de la figure 4.

Bien entendu, comme décrit dans le document FR 97 14008 déposé le 29 octobre 1997, le palier 6 peut être du type palier lisse à matière anti-friction auquel on pourra se reporter pour plus de précisions.

Plus précisément le plateau de réaction 20 comporte à sa périphérie interne un anneau décalé axialement en direction du flasque 14 de la première masse 1.

Deux bagues, en forme d'équerre, tournées l'une vers l'autre, sont interposées radialement entre la périphérie externe du moyeu central, rapporté sur le flasque de la première masse 1, et la périphérie interne de l'anneau central. Les bagues, par leur partie axiale, forment le palier et comportent une partie transversale interposée axialement, d'une part, entre le flasque de la première masse et l'anneau central pour fermer de manière étanche la cavité et, d'autre part, entre l'anneau et une rondelle d'application sollicitée par une rondelle Belleville au contact de cette partie transversale. Dans ce cas la rondelle Belleville prend appui sur la rondelle d'appui des têtes des vis de fixation.

Le palier 6 peut donc appartenir au dispositif de frottement 4 avec une bague montée à l'extérieur de la cavité étanche et une bague, intercalée axialement entre l'anneau et le flasque de la première masse pour délimiter la chambre étanche. Le joint d'étanchéité peut remplacer celui de ce document et comporter une pièce de contact interposée axialement entre un rebord radial et le plateau de réaction, ledit rebord appartenant à une couronne d'orientation axiale et à profil polygonal pour action sur les ressorts 3 comme décrit dans le document EP-A-0 777 059 (figure 1). Les ressorts 3 avec leurs socles sont alors logés dans des échancrures du rebord 10 ouvertes radialement vers l'intérieur et délimitées chacune par deux saillies radiales dirigées vers l'intérieur. Ainsi dans ce cas la couronne d'orientation axiale, présentant le profil polygonal ou d'une manière générale un profil de contact pour les organes éléstiques, est rapportée sur le plateau de réaction avec interposition de la pièce de contact entre la couronne et le plateau réaction. Par exemple, la couronne est en tôle emboutie et présente à son extrémité axiale la plus proche du plateau de réaction un rebord radial de fixation dirigée vers l'intérieur pour sa fixation sur le plateau de réaction en sorte que la couronne a en section une forme d'equerre.
La fixation est réalisée par exemple par rivetage, les rivets traversant un bossage du type du bossage 123 des figures 4 à 7 ainsi que le premier tronçon de fixation 74 de la pièce de contact 71, ce tronçon étant interposé entre le bossage et le rebord radial de la couronne. Pour plus de précision, on se reportera par exemple au document FR-98 13584 déposé le 29 octobre 1998 et montrant une telle couronne rapportée au profil de contact pour les ressorts.
Dans tous les cas, grâce à la pièce de contact on réduit la température dans la cavité remplie par exemple en partie de graisse.

Bien entendu les ressorts peuvent être d'orientation radiale comme dans le document DE-A-19 21 972 en étant montés à articulation à leur périphérie externe chacun sur un axe porté par la périphérie externe du flasque 14 et à leur périphérie interne chacun sur un axe porté par une couronne radiale entre laquelle est insérée la pièce de contact.

La couronne servant de support aux articulations des ressorts peut avoir différentes formes. Cette pièce est rapportée sur la deuxième masse et forme une pièce de serrage pour la pièce de contact.

Bien entendu on peut inverser les structures, la pièce de contact étant portée par la première masse 1 et la pièce d'étanchéité par la seconde masse 2.

Dans ce cas la pièce de contact s'étend radialement au-dessus de la pièce d'étanchéité, alors que dans les figures représentées la pièce d'étanchéité s'étend radialement au-dessus de la pièce de contact et entoure au moins en majeure partie celle-ci.

La solution représentée dans les figures est préférable car la lèvre 79 ou le clinquant 179 est disposé le plus près possible du rebord 10 ce qui est favorable car la graisse de la cavité, remplie ici partiellement, est centrifugée à la périphérie externe de l'amortisseur de torsion. La lèvre 79 ou le clinquant 179 peut donc être graissé, ce qui est favorable pour la durée de vie du joint 7.

En outre la graisse par action sur la lèvre 79 ou le clinquant 179 empêche une perte d'étanchéité.

On appréciera que les collerettes 92,192,292 permettent de loger la pièce d'étanchéité dans l'épaisseur du couvercle 11.

Bien entendu on peut profiter des chanfreins 93,193 pour créer une réserve de graisse délimitée par le chanfrein 93,193 et la pièce d'étanchéité.

Le joint 7 assure une très bonne étanchéité et ce de manière durable et fiable du fait qu'il est libéré des contraintes supplémentaires dues aux tolérances de fabrication.

Le joint d'étanchéité dynamique est monté à jeu radial sur une pièce de support (le couvercle ou une pièce de la deuxième masse). La pièce de support est solidaire de l'une des parties coaxiales.

Le joint est en contact avec une portée de contact solidaire de l'autre partie coaxiale. Le joint se monte à fixation par pincement axial sur la pièce de support insérée entre une première et une seconde branche portée par la pièce d'étanchéité 70,170,270,370. Chaque branche s'appuie sur un siège formé sur la pièce de support 11.

La première branche 79,179 forme un élément d'étanchéité délimitant la cavité 5. Cette première branche 79,179 glisse de manière contrôlée sur la surface 90,184 formant le siège précité. Ce siège 90,184 est un siège d'étanchéité.

La deuxième branche 77,177,279 glisse sur une surface 91,191,285 formant le second siège. Le premier et le second siège sont disposés sur les faces opposées de la pièce de support. La pièce d'étanchéité peut être d'un seul tenant avec les deux branches (figures 4,7), ou d'un seul tenant avec l'une des deux branches (figure 5). En variante elle porte les deux branches 179,279 distinctes de la pièce d'étanchéité 270 (figure 7).

Toutes les combinaisons sont possibles. Bien entendu le flasque 14 et le couvercle 11 peuvent épouser la forme des ressorts 3, comme dans le document DE-28 48 748 (figure 1). Lorsque les ressorts 3 sont courbes, le flasque 14 et le couvercle 11 peuvent délimiter un canal annulaire de logement des ressorts 3.

On notera qu'un jeu axial existe entre l'anneau 77,177 et l'extrémité libre de la jupe 72 pour pouvoir effectuer un mouvement axial relatif au montage entre la pièce d'étanchéité et la jupe. De même un jeu axial existe entre la lèvre 73 et le deuxième tronçon 76 de la pièce de contact.

D'une manière générale les jeux axiaux et radiaux existant entre la pièce d'étanchéité et respectivement la pièce de contact 71 et la pièce porteuse 11 dépend des applications.

On notera que le voile 21 constitue une pièce d'action des organes élastiques. Cette pièce d'action peut consister de manière précitée en une couronne d'orientation axiale à profil polygonal ou en une couronne de support des articulations des organes élastiques.

Dans toutes les figures la pièce de contact est prise en sandwich entre un bossage du plateau de réaction, que présente la face frontale 122, et la pièce d'action.

Dans toutes les figures un contact local se produit entre les branches de la pièce d'étanchéité et la pièce porteuse et le joint est auto-positionneur lors du montage (de l'assemblage) de l'amortisseur de torsion.

La matière de la pièce d'étanchéité dépend des applications. Néanmoins on choisit celle-ci afin qu'elle présente des bonnes qualités de glissement.

On peut rendre la pièce d'étanchéité et/ou la portée de contact rugueuse pour privilégier un glissement au niveau de la pièce porteuse.

La pièce d'étanchéité peut être ainsi bimatière.

A la figure 5 un jeu radial existe entre l'anneau continu 182, éventuellement fractionné en pattes, et le couvercle 11.

Il en est de même à la figure 6. Le clinquant souple 179,279 peut être en une autre matière que du métal. Il peut être en matière plastique renforcé par des fibres.

Dans tous les cas la pièce d'étanchéité présente une lèvre 73,78,378 issue d'un anneau d'orientation transversal 77,177,277 et implantée radialement en dessous d'une portion d'orientation axiale 82,182 issue de l'anneau 77,177,277 et portant la première branche 79,179.

En variante, la pièce de contact 71 est en matériau thermiquement isolant ou porte une rondelle en matériau thermiquement isolant remplaçant au moins en partie le bossage 123. Grâce à cette rondelle on peut supprimer le bossage. Dans tous les cas, on protège la pièce d'étanchéité.

## Revendications

1. Amortisseur de torsion, notamment double volant amortisseur de torsion pour véhicules automobiles, comportant deux parties coaxiales (1,2) montées rotatives l'une par rapport à l'autre à l'encontre d'organes élastiques (3) lubrifiés et montés dans une cavité étanche (5) portée en majeure partie par une première (1) des parties coaxiales (1,2) et fermée par un joint d'étanchéité dynamique (7), dans lequel le joint d'étanchéité dynamique (7) est porté par une pièce de support (11) appartenant à la première partie coaxiale (1) et est implanté radialement entre la pièce de support (11) et une portée annulaire de contact, appartenant à la deuxième (2) des parties coaxiales (1,2), **caractérisé en ce que** la portée annulaire de contact (72) est d'orientation axiale et le joint d'étanchéité dynamique (70,170,270,370) comporte une première branche (79,179) et une seconde branche (77,177,279) orientées radialement qui s'étendent de part et d'autre de la pièce de support (11), laquelle présente sur chacune de ses faces opposées un siège (90,184,284 - 91,191, 285) pour chacune desdites branches (79,179 - 77,177,279) et **en ce que** le joint d'étanchéité (70,170,270,370) est monté à jeu radial par rapport à la pièce de support (11).

2. Amortisseur de torsion selon la revendication 1, **caractérisé en ce que** le serrage exercé par les branches (79,179,77,177,279) du joint d'étanchéité (70,170,270,370) sur la pièce de support (11) est inférieur au serrage existant entre le joint d'étanchéité (70,170,270,370) et la portée de contact (72).

3. Amortisseur de torsion selon l'une des revendications 1 ou 2, **caractérisé en ce que** le joint d'étanchéité (70,370) est d'un seul tenant.

4. Amortisseur de torsion selon l'une des revendications 1 ou 2, **caractérisé en ce que** le joint d'étanchéité comprend une pièce d'étanchéité (170) munie de la deuxième branche (77,177) d'un seul tenant, tandis que la première branche (179) est distincte de la pièce d'étanchéité (170) en étant portée par celle-ci.

5. Amortisseur de torsion selon l'une des revendications 1 ou 2, **caractérisé en ce que** le joint d'étanchéité comprend une pièce d'étanchéité (270) et la première (179) et la seconde branche (279) sont distinctes de la pièce d'étanchéité (270) en étant portées par celle-ci.

6. Amortisseur de torsion selon l'une des revendications 3 ou 4, **caractérisé en ce que** la deuxième branche (77,177) est formée par un anneau continu (77,177) d'orientation transversale en contact avec un épaulement d'orientation transversale (91,191) de la pièce de support (11) constituant le siège de la deuxième branche (77,177).

7. Amortisseur de torsion selon l'une des revendications 3 ou 6, **caractérisé en ce que** la première branche (79) consiste en une lèvre (79) souple issue d'une portion (82) d'orientation axiale que présente le joint d'étanchéité (70,370).

8. Amortisseur de torsion selon la revendication 7, **caractérisé en ce que** la lèvre (79) est dirigée radialement vers l'extérieur et se raccorde par un coude arrondi (83) à la portion d'orientation axiale (82).

9. Amortisseur de torsion selon la revendication 8, **caractérisé en ce que** l'extrémité libre de la lèvre (79) est effilée pour contact local avec un épaulement transversal (90) de la pièce de support (11), ledit épaulement constituant le siège de la lèvre.

10. Amortisseur de torsion selon l'une quelconque des revendications 7 à 9, **caractérisé en ce que** la portion d'orientation axiale (82) est issue d'un anneau (77) constituant la deuxième branche et **en ce qu'**un jeu radial existe entre ladite p ortion axiale et la pièce de support (11).

11. Amortisseur de torsion selon l'une des revendications 4 ou 5, **caractérisé en ce que** la première branche (179) consiste en un clinquant s'appuyant sur une face inclinée (184) de la pièce porteuse, ladite face (184) constituant le siège du clinquant (179).

12. Amortisseur de torsion selon la revendication 11, **caractérisé en ce que** le clinquant est porté par un anneau (182) d'orientation axiale, éventuellement fractionné en pattes, et **en ce que** l'anneau (182) présente à son extrémité libre un cran (183), éventuellement fractionné, formant un épaulement transversal pour le clinquant.

13. Amortisseur de torsion selon la revendication 12, **caractérisé en ce qu'**un jeu radial existe entre l'anneau (182) et la pièce de support (11).

14. Amortisseur de torsion selon la revendication 13, **caractérisé en ce que** l'anneau (182) d'orientation axiale est issu d'un anneau d'orientation transversal (177) constituant la deuxième branche.

15. Amortisseur de torsion selon la revendication 13, **caractérisé en ce que** l'anneau d'orientation axiale (182) est issu d'un anneau d'orientation transversal (277) formant un épaulement par un deuxième clinquant (279) constituant la deuxième branche, le deuxième clinquant (279) s'appuyant sur une face inclinée (285) constituant le deuxième siège.

16. Amortisseur de torsion selon l'une quelconque des revendications 1 à 15, **caractérisé en ce que** le joint d'étanchéité comporte au moins une lèvre (78,73,378) d'orientation axiale pour contact avec la portée de contact (72).

17. Amortisseur de torsion selon la revendication 16, **caractérisé en ce que** la lèvre est issue d'un anneau (77,177,277) d'orientation transversale et est implantée radialement en-dessous d'une portion d'orientation axiale (82,182) issue dudit anneau et portant la première branche (79,179).

18. Amortisseur de torsion l'une des revendications 16 ou 17, **caractérisé en ce que** la portée de contact (72) appartient à une pièce de contact (71) solidaire de la deuxième partie coaxiale (2) et **en ce que** la pièce de contact (71) présente une jupe annulaire d'orientation axiale (72) constituant à la faveur de l'une de ses périphéries la portée de contact.

19. Amortisseur de torsion selon la revendication 18, **caractérisé en ce que** la jupe (72) se raccorde à l'une de ses extrémités à un deuxième tronçon (76), d'orientation transversale, raccordé par un tronçon incliné (75) à un premier tronçon (74), d'orientation transversale, et **en ce que** le premier tronçon (74) est fixé à la deuxième partie coaxiale (2).

20. Amortisseur de torsion selon l'une des revendications 18 ou 19, **caractérisé en ce que** le joint d'étanchéité (70) comporte deux lèvres (73,78) d'orientation axiale issues de l'anneau (77), d'orientation transversale, à savoir une première lèvre (73) destinée à venir en contact avec la périphérie interne de la jupe (72) et une deuxième lèvre (78) destinée à venir en contact avec la périphérie externe de la jupe (72).

21. Amortisseur de torsion selon la revendication 20, **caractérisé en ce que** la première (73) et la deuxième lèvre (78) présentent chacune un bourrelet (80,81) pour contact avec la jupe et **en ce que** la distance entre les bourrelets (80,81) est inférieure à l'épaisseur de la jupe (72).

22. Amortisseur de torsion selon l'une des revendications 18 ou 19, **caractérisé en ce que** le joint d'étanchéité (70,170,270) comporte une lèvre (73), d'orientation axiale, en contact avec la périphérie interne de la jupe (72).

23. Amortisseur de torsion selon l'une des revendications 18 ou 19, **caractérisé en ce que** le joint d'étanchéité (370) comporte une lèvre ((378) d'orientation axiale en contact avec la périphérie externe de la jupe (72).

24. Amortisseur de torsion selon l'une des revendications 22 ou 23, **caractérisé en ce que** la lèvre (73,378) présente à son extrémité libre un bourrelet pour contact local avec la jupe (72).

25. Amortisseur selon l'une quelconque des revendications 19 à 24, **caractérisé en ce que** les parties coaxiales consistent en des masses tournantes (1,2), **en ce que** l'une des masses (1,2), dite seconde masse (2), porte le plateau de réaction (20) d'un embrayage à friction, tandis que la première masse (1) porte en majeure partie la cavité étanche (5) et **en ce que** la deuxième masse (2) est montée rotative sur la première masse par l'intermédiaire d'un palier (6) intervenant à la périphérie interne de la seconde masse (2) et **en ce que** le joint d'étanchéité dynamique (7) est monté radialement au-dessus du palier (6).

26. Amortisseur de torsion selon la revendication 25, **caractérisée ce que** la première masse (1) porte un couvercle (11) formant la pièce porteuse et en ce que le joint d'étanchéité dynamique (7) intervient entre la périphérie interne du couvercle (11) et la jupe (72) formant la périphérie externe de la pièce de contact (71).

27. Amortisseur de torsion selon l'une quelconque des revendications 25 à 27, **caractérisé en ce que** le palier (6) ferme la cavité et est interposé radialement entre un moyeu central (16) de la première masse (1) et la périphérie interne de la seconde masse (2), et **en ce que** la moyeu central (16) est solidaire d'un flasque (14), lui-même solidaire du couvercle (11) pour délimiter la cavité étanche (5).

## Patentansprüche

1. Torsionsdämpfer, insbesondere Zweimassen-Torsionsdämpfungsschwungrad für Kraftfahrzeuge, umfassend zwei koaxiale Teile (1, 2), die im Verhältnis zueinander drehbar entgegen geschmierten elastischen Organen (3) gelagert sind, die in einem dichten Hohlraum (5) gelagert sind, der zum größten Teil an einem ersten (1) der koaxialen Teile (1, 2) angebracht und durch eine dynamische Dichtung (7) verschlossen ist, wobei die dynamische Dichtung (7) an einem Trägerteil (11) angebracht ist, das zu dem ersten koaxialen Teil (1) gehört und radial zwischen dem Trägerteil (11) und einer ringförmigen Kontaktauflagefläche angeordnet ist, die zu dem zweiten (2) der koaxialen Teile (1, 2) gehört, **dadurch gekennzeichnet, dass** die Kontaktauflagefläche (72) axial ausgerichtet ist und die dynamische Dichtung (70, 170, 270, 370) einen ersten Schenkel (79, 179) und einen zweiten Schenkel (77, 177, 279) von jeweils radialer Ausrichtung trägt, die sich beiderseits des Trägerteils (11) erstrecken, welches auf jeder seiner gegenüberliegenden Seiten einen Sitz (90, 184, 284 - 91, 191, 285) für jeden dieser Schenkel (79, 179 - 77, 177, 279) aufweist, und dass die Dichtung (70, 170, 270, 370) mit radialem Spiel im Verhältnis zum Trägerteil (11) gelagert ist.

2. Torsionsdämpfer nach Anspruch 1, **dadurch gekennzeichnet, dass** die durch die Schenkel (79, 179, 77, 177, 279) der Dichtung (70, 170, 270, 370) auf das Trägerteil (11) ausgeübte Einspannung geringer als die Einspannung ist, die zwischen der Dichtung (70, 170, 270, 370) und der Kontaktauflagefläche (72) existiert.

3. Torsionsdämpfer nach Anspruch 1 oder 2, **dadurch gekennzeichnet, dass** die Dichtung (70, 370) einstückig ausgeführt ist.

4. Torsionsdämpfer nach Anspruch 1 oder 2, **dadurch gekennzeichnet, dass** die Dichtung ein Dichtungsteil (170) umfasst, welches einstückig mit dem zweiten Schenkel (77, 177) ausgeführt ist, während der erste Schenkel (179) vom Dichtungsteil (170) getrennt ausgeführt und von diesem getragen ist.

5. Torsionsdämpfer nach Anspruch 1 oder 2, **dadurch gekennzeichnet, dass** die Dichtung ein Dichtungsteil (270) umfasst, und der erste (179) und der zweite Schenkel (279) vom Dichtungsteil (270) getrennt ausgeführt und von diesem getragen sind.

6. Torsionsdämpfer nach Anspruch 3 oder 4, **dadurch gekennzeichnet, dass** der zweite Schenkel (77, 177) aus einem quer ausgerichteten durchgehenden Ring (77, 177) in Kontakt mit einer quer ausgerichteten Schulter (91, 191) des Trägerteils (11) besteht, die den Sitz des zweiten Schenkels (77, 177) bildet.

7. Torsionsdämpfer nach Anspruch 3 oder 6, **dadurch gekennzeichnet, dass** der erste Schenkel (79) aus einer biegsamen Dichtlippe (79) besteht, die von einem axial ausgerichteten Abschnitt (82) ausgeht, den die Dichtung (70, 370) aufweist.

8. Torsionsdämpfer nach Anspruch 7, **dadurch gekennzeichnet, dass** die Dichtlippe (79) radial nach außen gerichtet ist und sich über eine abgerundete Biegung (83) an den axial ausgerichteten Abschnitt (82) anschließt.

9. Torsionsdämpfer nach Anspruch 8, **dadurch gekennzeichnet, dass** das freie Ende der Dichtlippe (79) spitz zulaufend für den örtlichen Kontakt mit einer Querschulter (90) des Trägerteils (11) ausgeführt ist, wobei die besagte Schulter den Sitz der Dichtlippe bildet.

10. Torsionsdämpfer nach einem der Ansprüche 7 bis 9, **dadurch gekennzeichnet, dass** der axial ausgerichtete Abschnitt (82) von einem Ring (77) ausgeht, der den besagten zweiten Schenkel bildet, und dass ein radiales Spiel zwischen dem besagten axialen Abschnitt und dem Trägerteil (11) besteht.

11. Torsionsdämpfer nach Anspruch 4 oder 5, **dadurch gekennzeichnet, dass** der erste Schenkel (179) aus einer Leiste besteht, die auf einer geneigten Fläche (184) des Trägerteils anliegt, wobei die besagte Fläche (184) den Sitz der Leiste (179) bildet.

12. Torsionsdämpfer nach Anspruch 11, **dadurch gekennzeichnet, dass** die Leiste an einem axial ausgerichteten, gegebenenfalls in Ansätze unterteilten Ring (182) angebracht ist und dass der Ring (182) an seinem freien Ende eine, gegebenenfalls unterteilte Raste (183) aufweist, die eine Querschulter für die Leiste bildet.

13. Torsionsdämpfer nach Anspruch 12, **dadurch gekennzeichnet, dass** ein radiales Spiel zwischen dem Ring (182) und dem Trägerteil (11) existiert.

14. Torsionsdämpfer nach Anspruch 13, **dadurch gekennzeichnet, dass** der axial ausgerichtete Ring (182) von einem quer ausgerichteten Ring (177) ausgeht, der den zweiten Schenkel bildet.

15. Torsionsdämpfer nach Anspruch 13, **dadurch gekennzeichnet, dass** der axial ausgerichtete Ring (182) von einem quer ausgerichteten Ring (277) ausgeht, der ein Schulter für eine zweite Leiste (279) bildet, die den zweiten Schenkel bildet, wobei die zweite Leiste (279) auf einer geneigten Fläche (285) anliegt, die den zweiten Sitz bildet.

16. Torsionsdämpfer nach einem der Ansprüche 1 bis 15, **dadurch gekennzeichnet, dass** die Dichtung wenigstens eine axial ausgerichtete Dichtlippe (78, 73, 378) für den Kontakt mit der Kontaktauflagefläche (72) umfasst.

17. Torsionsdämpfer nach Anspruch 16, **dadurch gekennzeichnet, dass** die Dichtlippe von einem quer ausgerichteten Ring (77, 177, 277) ausgeht und radial innerhalb eines axial ausgerichteten Abschnitts (82, 182) angeordnet ist, der von dem besagten Ring ausgeht und den ersten Schenkel (79, 179) trägt.

18. Torsionsdämpfer nach Anspruch 16 oder 17, **dadurch gekennzeichnet, dass** die Kontaktauflagefläche (72) zu einem fest mit dem zweiten koaxialen Teil (2) verbundenen Kontaktteil (71) gehört und dass das Kontaktteil (71) eine axial ausgerichtete ringförmige Einfassung (72) aufweist, die mittels eines ihrer Umfänge die Kontaktauflagefläche bildet.

19. Torsionsdämpfer nach Anspruch 18, **dadurch gekennzeichnet, dass** sich die Einfassung (72) an einem ihrer Enden an ein zweites quer ausgerichtetes Teilstück (76) anschließt, das durch ein geneigtes Teilstück (75) an ein erstes quer ausgerichtetes Teilstück (74) angeschlossen ist, und dass das erste Teilstück (74) an dem zweiten koaxialen Teil (2) befestigt ist.

20. Torsionsdämpfer nach Anspruch 18 oder 19, **dadurch gekennzeichnet, dass** die Dichtung (70) zwei axial ausgerichtete Dichtlippen (73, 78) aufweist, die von dem quer ausgerichteten Ring (77) ausgehen, und zwar eine erste Dichtlippe (73), die dazu bestimmt ist, mit dem inneren Umfang der Einfassung (72) in Kontakt zu kommen, und eine zweite Dichtlippe (78), die dazu bestimmt ist, mit dem äußeren Umfang der Einfassung (72) in Kontakt zu kommen.

21. Torsionsdämpfer nach Anspruch 20, **dadurch gekennzeichnet, dass** die erste (73) und die zweite Dichtlippe (78) jeweils einen Wulst (80, 81) für den Kontakt mit der Einfassung aufweisen und dass der Abstand zwischen den Wülsten (80, 81) kleiner als die Dicke der Einfassung (72) ist.

22. Torsionsdämpfer nach Anspruch 18 oder 19, **dadurch gekennzeichnet, dass** das Dichtungsteil (70, 170, 270) eine axial ausgerichtete Dichtlippe (73) in Kontakt mit dem inneren Umfang der Einfassung (72) umfasst.

23. Torsionsdämpfer nach Anspruch 18 oder 19, **dadurch gekennzeichnet, dass** das Dichtungsteil (370) eine axial ausgerichtete Dichtlippe (378) in Kontakt mit dem äußeren Umfang der Einfassung (72) aufweist.

24. Torsionsdämpfer nach Anspruch 22 oder 23, **dadurch gekennzeichnet, dass** die Dichtlippe (73, 378) an ihrem freien Ende einen Wulst für den örtlichen Kontakt mit der Einfassung (72) aufweist.

25. Torsionsdämpfer nach einem der Ansprüche 19 bis 24, **dadurch gekennzeichnet, dass** die koaxialen Teile aus umlaufenden Massen (1, 2) bestehen, dass eine der Massen (1, 2), die als zweite Masse (2) bezeichnet wird, die Gegenanpressplatte (20) einer Reibungskupplung trägt, während die erste Masse (1) zum größten Teil den dichten Hohlraum (5) trägt, und dass die zweite Masse (2) drehbar an der ersten Masse über ein Lager (6) gelagert ist, das am inneren Umfang der zweiten Masse (2) zum Einsatz kommt, und dass die Bewegungsdichtung (7) radial außerhalb des Lagers (6) angebracht ist.

26. Torsionsdämpfer nach Anspruch 25, **dadurch gekennzeichnet, dass** die erste Masse (1) einen Deckel (11) trägt, der das Trägerteil bildet, und dass die Bewegungsdichtung (7) zwischen dem inneren Umfang des Deckels (11) und der Einfassung (72) zum Einsatz kommt, die den äußeren Umfang des Kontaktteils (71) bildet.

27. Torsionsdämpfer nach Anspruch 25 oder 26, **dadurch gekennzeichnet, dass** das Lager (6) den Hohlraum verschließt und radial zwischen der mittigen Nabe (16) der ersten Masse (1) und dem inneren Umfang der zweiten Masse (2) eingefügt ist, und dass die mittige Nabe (16) fest mit einem Flansch (14) verbunden ist, der seinerseits fest mit dem Deckel (11) verbunden ist, um den dichten Hohlraum (5) zu begrenzen.

## Claims

1. Torsion damper, in particular a double torsion damping flywheel for motor vehicles, comprising two coaxial parts (1, 2) mounted so as to rotate with respect to each other counter to elastic members (3) lubricated and mounted in a sealed cavity (5) carried for the major part by a first one (1) of the coaxial parts (1, 2) and closed by a dynamic sealing joint (7), in which the dynamic sealing joint (7) is carried by a support piece (11) belonging to the first coaxial part (1) and is located radially between the support piece (11) and an annular contact surface belonging to the second (2) of the coaxial parts (1, 2), **characterised in that** the annular contact surface (72) is axially oriented and the dynamic sealing joint (70, 170, 270, 370) comprises a first arm (79, 179) and a second arm (77, 177, 279) both oriented radially and extending on each side of the support piece (11), which has, on each of its opposing faces, a seat (90, 184, 284 - 91, 191, 285) for each of the said arms (79, 179 - 77, 177, 279), and **in that** the sealing joint (70, 170, 270, 370) is mounted with radial clearance with respect to the support piece (11).

2. Torsion damper according to Claim 1, **characterised in that** the clamping exerted by the arms (79, 179, 77, 177, 279) of the sealing joint (70, 170, 270, 370) on the support piece (11) is less than the clamping existing between the sealing joint (70, 170, 270, 370) and the contact surface (72).

3. Torsion damper according to one of Claims 1 or 2, **characterised in that** the sealing joint (70, 370) is in a single piece.

4. Torsion damper according to one of Claims 1 or 2, **characterised in that** the sealing joint comprises a sealing piece (170) provided with the second arm (77, 177) in a single piece, whilst the first arm (179) is distinct from the sealing piece (170) whilst being carried by it.

5. Torsion damper according to one of Claims 1 or 2, **characterised in that** the sealing joint comprises a sealing piece (270) and the first (179) and second branch (279) are distinct from the sealing piece (270) whilst being carried by it.

6. Torsion damper according to one of Claims 3 or 4, **characterised in that** the second branch (77, 177) is formed by a transversely oriented continuous ring (77, 177) in contact with a transversely oriented shoulder (91, 191) on the support piece (11) constituting the seat of the second arm (77, 177).

7. Torsion damper according to one of Claims 3 or 6, **characterised in that** the first branch (79) consists of a flexible lip (79) issuing from an axially oriented portion (82) on the sealing joint (70, 370).

8. Torsion damper according to Claim 7, **characterised in that** the lip (79) is directed radially outwards and is connected by a rounded elbow (83) to the axially oriented portion (82).

9. Torsion damper according to Claim 8, **characterised in that** the free end of the lip (79) is tapered for local contact with a transverse shoulder (90) on the support piece (11), the said shoulder constituting the seat of the lip.

10. Torsion damper according to any one of Claims 7 to 9,
**characterised in that** the axially oriented portion (82) issues from a ring (77) constituting the second arm and **in that** a radial clearance exists between the said axial portion and the support piece (11).

11. Torsion damper according to one of Claims 4 or 5, **characterised in that** the first arm (179) consists of a foil bearing on an inclined face (184) of the bearing piece, the said face (184) constituting the seat of the foil (179).

12. Torsion damper according to Claim 12, **characterised in that** the foil is carried by an axially oriented ring (182), possibly divided into lugs, and **in that** the ring (182) has at its free end a catch (183), possibly divided, forming a transverse shoulder for the foil.

13. Torsion damper according to Claim 12, **characterised in that** a radial clearance exists between the ring (182) and the support piece (11).

14. Torsion damper according to Claim 13, **characterised in that** the axially oriented ring (182) issues from a transversely oriented ring (177) constituting the second arm.

15. Torsion damper according to Claim 13, **characterised in that** the axially oriented ring (182) issues from a transversely oriented ring (277) forming a shoulder by means of a second foil (279) constituting the second arm, the second foil (279) bearing on an inclined face (285) constituting the second seat.

16. Torsion damper according to any one of Claims 1 to 15, **characterised in that** the sealing joint comprises at least one axially oriented lip (78, 73, 378) for contact with the contact surface (72).

17. Torsion damper according to Claim 16, **characterised in that** the lip issues from a transversely oriented ring (77, 177, 277) and is located radially below an axially oriented portion (82, 182) issuing from the said ring and carrying the second arm (79, 179).

18. Torsion damper according to one of Claims 16 or 17, **characterised in that** the contact surface (72) belongs to a contact piece (71) fixed to the second coaxial part (2) and **in that** the contact piece (71) has an axially oriented annular skirt (72) constituting, by means of one of its peripheries, the contact surface.

19. Torsion damper according to Claim 18, **characterised in that** the skirt (72) is connected at one of its ends to a transversely oriented second portion (76) connected by an inclined portion (75) to a transversely oriented first portion (74) and **in that** the first portion (74) is fixed to the second coaxial part (2).

20. Torsion damper according to one of Claims 18 or 19, **characterised in that** the sealing joint (70) comprises two axially oriented lips (73, 78) issuing from the transversely oriented ring (77), namely a first lip (73) intended to come into contact with the internal periphery of the skirt (72) and a second lip (78) intended to come into contact with the external periphery of the skirt (72).

21. Torsion damper according to Claim 20, **characterised in that** the first (73) and second (78) lip each have a rim (80, 81) for contact with the skirt and **in that** the distance between the rims (80, 81) is less than the thickness of the skirt (72).

22. Torsion damper according to one of Claims 18 or 19, **characterised in that** the sealing joint (70, 170, 270) comprises an axially oriented lip (73) in contact with the internal periphery of the skirt (72).

23. Torsion damper according to one of Claims 18 or 19, **characterised in that** the sealing joint (370) comprises an axially oriented lip (378) in contact with the external periphery of the skirt (72).

24. Torsion damper according to one of Claims 22 or 23, **characterised in that** the lip (73, 378) has at its free end a rim for local contact with the skirt (72).

25. Damper according to any one of Claims 19 to 24, **characterised in that** the coaxial parts consist of rotating masses (1, 2), **in that** one of the masses (1, 2), referred to as the second mass (2), carries the reaction plate (20) of a friction clutch, whilst the first mass (1) carries for the major part the sealed cavity (5) and **in that** the second mass (2) is mounted so as to rotate on the first mass by means of a bearing (6) acting at the internal periphery of the second mass (2) and **in that** the dynamic sealing joint (7) is mounted radially above the bearing (6).

26. Torsion damper according to Claim 25, **characterised in that** the first mass (1) carries a cover (11) forming the carrier piece and **in that** the dynamic sealing joint (7) acts between the internal periphery of the cover (11) and the skirt (72) forming the external periphery of the contact piece (71).

27. Torsion damper according to any one of Claims 25 to 27, **characterised in that** the bearing (6) closes off the cavity and is interposed radially between a central hub (16) on the first mass (1) and the internal periphery of the second mass (2), and **in that** the central hub (16) is fixed to a plate (14), itself fixed to the cover (11) in order to delimit the sealed cavity (5).
